# EUROPÄISCHE PATENTSCHRIFT

(11) **EP 2 510 314 B1**
(45) Veröffentlichungstag und Bekanntmachung des Hinweises auf die Patenterteilung: **28.09.2016**
(21) Anmeldenummer: 09801683.5
(22) Anmeldetag: 10.12.2009
(51) Int. Cl.: G01D 11/24, H02K 5/22, H02K 11/35

(54) **ZUSTANDSÜBERWACHUNGSSYSTEM FÜR EINEN MOTOR**
CONDITION MONITORING SYSTEM FOR A MOTOR
SYSTÈME DE SURVEILLANCE DE L'ÉTAT D'UN MOTEUR

(43) Veröffentlichungstag der Anmeldung: 17.10.2012
(73) Patentinhaber: Siemens Aktiengesellschaft, 80333 München (DE)
(72) Erfinder: HASSEL, Jörg, 91058 Erlangen (DE)
(86) Internationale Anmeldenummer: PCT/EP2009/066797
(87) Internationale Veröffentlichungsnummer: WO 2011/069543

(56) Entgegenhaltungen:
- WO-A1-2008/009554
- DE-A1- 10 339 017
- US-A- 6 124 692

## Beschreibung

Die Erfindung betrifft einen Condition Monitoring System für einen Motor.

Das Versehen einer Anlage und insbesondere eines Motors mit Condition Monitoring Funktionen (Überwachungsfunktionen) ist in der Regel mit einem aufwändigen Installationsaufwand verbunden. Insbesondere bei einem nachträglichen Versehen eines Motors mit Condition Monitoring Funktionen sind meist sehr aufwändige und u.U. bauliche Maßnahmen erforderlich. Die zur Überwachung benötigten Sensoren müssen am Motor positioniert und angebracht werden. Ferner muss eine Verkabelung der Sensoren mit ihrer zuständigen Steuerung erfolgen. Frei liegende Leitungen im Arbeitsbereich müssen beispielsweise über Trassen oder Unterflurkabelkanäle verlegt werden, um eine Gefährdung von Mensch bzw. Maschinen im Arbeitsbereich zu verhindern. Durch das zusätzliche Installieren von Sensoren und dem zusätzlichen Verlegen von Leitungen muss u.U. die Sicherheit einer Anlage neu bewertet werden.

Bei einem Nachrüsten werden üblicherweise die für die Condition Monitoring Funktion benötigten Sensoren mit großem Aufwand als Einzelfunktionen nachträglich an einem Motor angebaut. Ein derartiges Nachrüsten erfordert somit ein erheblichen Installationsaufwand sowie Parametrieraufwand. Meist wird hierfür ein hochspezialisierter Installateur benötigt.

Aus der US 6 124 692 A ist Erfassungssystem zur Zustandsüberwachung für einen Elektromotor bekannt. Dieses Erfassungssystem ist in einem geschlossenen Gehäuse angeordnet und kann am Äußeren des Motors angebracht werden.

Aus der WO 2008/009554 A1 ist eine elektrische Maschine bekannt, welche Sensoren umfasst. Die Sensoren sind insbesondere an überwachungsbedürftigen Stellen der elektrischen Maschine angebracht.

Es ist daher Aufgabe der vorliegenden Erfindung eine einfache, kostengünstige Überwachung eines Motors zu ermöglichen. Erfindungsgemäß wird diese Aufgabe gelöst durch eine Vorrichtung gemäß Patentanspruch 1, d.h. durch einen Schaltkastendeckel für einen Motor umfassend:
- eine Sensoreinheit mit einem Sensor zur Erfassung einer Messgröße des Motors,
   - ein Kommunikationsmittel, welches dazu ausgebildet ist, einen die Messgröße charakterisierenden Kennwert einem Lesegerät bereitzustellen,
   - eine Versorgungseinheit zur Versorgung der Sensoreinheit mit Energie.

Vorteilhafte Weiterbildungen der Erfindung sind in den abhängigen Ansprüchen 2 bis 14 angegeben.

Der mit der Erfindung erzielte Vorteil besteht darin, dass durch den Schaltkastendeckel die Condition Monitoring Funktionen für den Motor, insbesondere Elektromotor, erzielt werden. Die für die Condition Monitoring Funktion benötigten Komponenten sind im Schaltkastendeckel integriert. Damit der Schaltkastendeckel eine Zustandsüberwachung des Motors durchführen kann, umfasst der Schaltkastendeckel mindestens eine Sensoreinheit, welche dazu ausgebildet ist, eine Messgröße des Motors zu erfassen. Ferner umfasst der Schaltkastendeckel ein Kommunikationsmittel welches dazu ausgebildet ist, mindestens einen die Messgröße charakterisierenden Kennwert einem Lesegerät bereitzustellen. Eine Versorgungseinheit des Schaltkastendeckels dient der Versorgung der Sensoreinheit und vorzugsweise ebenso des Kommunikationsmittels mit Energie.

Der Schaltkastendeckel bildet folglich eine autarke Überwachungseinheit, welche eine Überwachung des Motors ermöglicht. Ein Vorteil des Schaltkastendeckels mit integrierter Condition Monitoring Funktion ist, dass keine aufwändige Verkabelung zwischen der Sensorik und der Kommunikationseinheit notwendig ist, da dies bereits innerhalb des Schaltkastendeckels realisiert ist. Der Montageaufwand durch ein Verlegen von Kabeln herkömmlicher Condition Monitoring Sensoren, kann somit vollständig entfallen.

Ein weiterer Vorteil der Motorüberwachung durch den Schaltkastendeckel besteht darin, dass hierdurch ein einfaches Nachrüsten für einen Endanwender ermöglicht wird. Ein Endanwender kann durch den Schaltkastendeckel mit integrierter Condition Monitoring Funktionalität auf einfache unkomplizierte Weise seine bereits bestehende Anlage und insbesondere den vorliegenden Motor mit Condition Monitoring Funktionen ausstatten. Hierfür muss lediglich der Schaltkastendeckel eines Schaltkastens des vorliegenden Motors mit einem erfindungsgemäßen Schaltkastendeckel ausgetauscht werden. Aufwändige Installationen und Verkabelungen am Motor sind nicht notwendig.

Über die Sensoreinheit des Schaltkastendeckels können mit entsprechenden Sensoren die erwünschten Messgrößen und folglich Kennwerte des Motors erfasst werden. Diese Messgrößen und insbesondere der die Messgröße charakterisierende Kennwert kann über das Kommunikationsmittel dem Lesegerät bereitgestellt werden. Das Lesegerät ist hierbei vorzugsweise außerhalb des Motors angeordnet. Über das dezentrale Lesegerät kann somit eine ständige Kontrolle des Motors durchgeführt werden. Bei entsprechender Ausbildung des Lesegerätes sowie des Kommunikationsmittels ist ebenso eine Onlineüberwachung des Motors möglich. Auf diese Weise kann eine ortsunabhängige Überwachung des Zustandes des Motors und folglich der Anlage erfolgen.

Durch Condition Monitoring Funktionen kann eine Früherkennung möglicherweise anstehender Probleme des Motors ermöglicht werden, so dass ein Endanwender rechtzeitig entsprechende Vorkehrungen treffen kann. Ferner kann durch das Versehen eines Motors mit Condition Monitoring Funktionen die Laufzeit des Motors verlängert werden, da letztendlich der Endanwender auf einen Mangel des Motors rechtzeitig hingewiesen wird und somit nicht wie üblich rein vorsorglich einen Motor austauschen muss.

In einer vorteilhaften Ausführungsform der Erfindung ist die Versorgungseinheit zur Versorgung des Kommunikationsmittels mit Energie vorgesehen.

Hierdurch bildet der Schaltkastendeckel eine in sich geschlossene Einheit, welche autark eingesetzt werden kann. Vorzugsweise ist die Versorgungseinheit dazu ausgebildet, das Kommunikationsmittel und/oder die Sensoreinheit vollständig mit Energie zu versorgen. Hinsichtlich der Sensoreinheit und/oder des Kommunikationsmittels ist demzufolge keine weitere Verdrahtung notwendig. Dies erleichtert insbesondere die Fertigung eines Motors mit einem Schaltkasten, welcher einen erfindungsgemäßen Schaltkastendeckel aufweist, sowie das Nachrüsten eines bestehenden Motors mit einem erfindungsgemäßen Schaltkastendeckel, welcher Condition Monitoring Funktionen aufweist. Ein Endanwender kann somit auf einfache Weise seine Anlage und insbesondere die Motoren mit einer Überwachungsfunktion ausstatten bzw. nachrüsten. Zum Nachrüsten muss er lediglich einen Schaltkastendeckel des bestehenden Motors mit einem erfindungsgemäßen motorzugehörigen Schaltkastendeckel austauschen. Je nach Kundenwunsch kann der Schaltkastendeckel vorzugsweise unterschiedliche Condition Monitoring Funktionen aufweisen.

In einer weiteren vorteilhaften Ausführungsform der Erfindung weist der Schaltkastendeckel Mittel zum Bereitstellen des elektronischen Typschildes des Motors über das Kommunikationsmittel auf.

Hierdurch können einem Lesegerät die wichtigsten Kenndaten des Motors bereitgestellt werden. Besonders vorteilhaft ist es, wenn das elektronische Typenschild des Motors ebenso im Schaltkastendeckel hinterlegt ist. Anhand der Informationen des elektronischen Typenschilds können weitere motorspezifische Analysen durchgeführt werden. Ferner kann ein Endanwender unkompliziert die motorrelevanten Daten über das Kommunikationsmittel abrufen und diese beilspielsweise für anstehende Analysen verwenden.

In einer weiteren vorteilhaften Ausführungsform der Erfindung weist die Sensoreinheit Mittel zur Teilentladungsmessung auf. Bei der Teilentladungsmessung wird eine Messgröße bzw. werden mehrere Messgrößen durch die Sensoreinheit erfasst, welche ein Vorliegen einer Teilentladung identifizieren. Ein die Messgröße/-n charakterisierender Kennwert wird letztendlich mit Hilfe des Kommunikationsmittels einem Lesegerät bereitgestellt. Ein Endanwender, welcher über das Lesegerät eine derartige Information erhält, kann dank dem Vorliegen dieser Informationen entsprechend reagieren und erforderliche Maßnahmen einleiten. Ebenso ist es möglich das eine Auswerteeinheit, welche ein Lesegerät zum Lesen der Kennwerte des Kommunikationsmittels aufweist, automatisch erforderliche Maßnahmen einleiten.

In einer weiteren vorteilhaften Ausführungsform der Erfindung weist die Sensoreinheit Mittel zum Messen einer Temperatur des Motors, insbesondere einer Ständerwicklung, und/oder einer Umgebungstemperatur des Motors auf.

Mit Hilfe der Sensoreinheit kann somit die Temperatur sowie die Umgebungstemperatur des Motors ermittelt werden. Diese Temperaturen bzw. ein diese Temperatur/-en charakterisierender Kennwert können über das Kommunikationsmittel zur weiteren Analyse einem Lesegerät bereitgestellt werden.

In einer weiteren vorteilhaften Ausführungsform der Erfindung weist die Sensoreinheit Mittel zum Messen einer Unwucht des Motors auf.

Eine Ermittlung einer Unwucht des Motors kann beispielsweise durch eine Analyse tiefer Frequenzbänder erfolgen. Folglich ist das Mittel zum Messen einer Unwucht des Motors vorzugsweise dazu ausgebildet, tiefe Frequenzbänder zu analysieren.

In einer weiteren vorteilhaften Ausführungsform der Erfindung weist die Sensoreinheit zur Bildung des Kennwertes mindestens einen Sensor zur Ermittlung einer Messgröße und einen Referenzwert des Motors zum Abgleich mit der ermittelten Messgröße des Sensors auf.

Der Referenzwert ist vorzugsweise in einem Speicher des Schaltkastendeckels hinterlegt. Dadurch, dass dem Schaltkastendeckel sowohl der Referenzwert des Motors als auch die ermittelte Messgröße vorliegt, kann durch einen Vergleich beider Werte miteinander eine Bewertung des vorliegenden Zustands durchgeführt werden.

Der Schaltkastendeckel und insbesondere seine Sensoreinheit kann folglich je nach Anwendungsszenario mit speziellen Sensoren, welche unterschiedliche Messgrößen des Motors ermitteln können, versehen sein, so dass durch einen Vergleich der ermittelten Messgrößen mit den jeweiligen Referenzwerten des Motors der vorliegende Zustand des Motors bestimmt werden kann. Eine derartige Bestimmung kann entweder bereits im Schaltkastendeckel selbst oder in einem nachgeschalteten Prozess erfolgen. Bei dem nachgeschalteten Prozess wird der Kennwert bzw. werden die Kennwerte durch ein Lesegerät vom Kommunikationsmittel abgerufen und anschließend analysiert.

In einer weiteren vorteilhaften Ausführungsform der Erfindung weist die Sensoreinheit Mittel zum Analysieren der Messgrößen untereinander auf.

Anhand einer derartigen Analyse der einzelnen Messgrößen untereinander kann eine vielfältigere Analyse bereits innerhalb des Schaltkastendeckels stattfinden. Vorzugsweise werden bei der Analyse ebenso die Referenzgrößen sowie die Informationen des elektronischen Typschildes mit einbezogen. Durch eine derartige Analyse kann ein verbesserter Rückschluss auf den vorliegenden Zustand des Motors gewonnen werden. Eine Analyse der einzelnen Messgrößen untereinander und/oder zugehöriger Referenzgrößen kann folglich zu einem einzelnen die Messgrößen charakterisierenden Kennwert führen. Anhand dieses Kennwertes kann folglich bestimmt werden, ob ein ordnungsgemäßer Zustand des Motors vorliegt oder nicht. Auf diese Weise kann der erforderliche Kommunikationsaufwand zu einem Lesegerät minimiert werden.

In einer weiteren vorteilhaften Ausführungsform der Erfindung weist die Sensoreinheit zur Ermittlung des Kennwertes einen Prozessor auf.

Durch die Integration des Prozessors im Schaltkastendeckel können komplexe Analysen der einzelnen Messgrößen untereinander bzw. mit zugehörigen Referenzgrößen durchgeführt werden. Ferner wird durch die Integration des Prozessors und vorzugsweise eines Speichers im Schaltkastendeckel die Möglichkeit geschaffen den Schaltkastendeckel nachträglich mit weiteren Funktionsauswertungen anzureichern. Ebenso ist es durch die Verlagerung der Funktionsauswertung in den Schaltkastendeckel möglich, eine Vorselektion der zu übertragenden Kennwerte durchzuführen. Folglich kann eine Kommunikation zwischen dem Kommunikationsmittel und dem Lesegerät reduziert werden. Ebenso wird durch die bereits stattfindende Analyse im Schaltkastendeckel ein Bedarf an zusätzlich notwendigen Komponenten neben dem Schaltkastendeckel minimiert, da letztendlich die gesamte Condition Monitoring Funktion des Motors inklusive der Analyse durch den Schaltkastendeckel realisiert wird.

Anhand einer in dem Prozessor hinterlegten Bewertungslogik können folglich die ermittelten Messgrößen der Sensoreinheit analysiert werden und es kann hieraus eine Messgröße gebildet werden, welche den Gesundheitszustand des Motors widerspiegelt. Diese Messgröße kann über ihren zugehörigen charakterisierenden Kennwert einem Lesegerät bereitgestellt werden.

In einer weiteren vorteilhaften Ausführungsform der Erfindung ist das Kommunikationsmittel zur Kommunikation mit einem externen Lesegerät vorgesehen.

Es erfolgt folglich eine Kommunikation mit einem dezentralen Lesegerät, welches sich außerhalb des Motors befindet. Eine Kommunikation mit dem externen Lesegerät kann drahtgebunden oder vorzugsweise drahtlos erfolgen. Ein Endanwender kann beispielsweise mit einem Handheld vorliegende Kennwerte bzw. Messgrößen des Motors abrufen und zur weiteren Analyse verwenden. Der Vorteil einer drahtlosen Kommunikation zwischen dem Kommunikationsmittel und dem Lesegerät besteht darin, dass der Installationsaufwand auf ein Minimum reduziert wird. Ein Endanwender muss folglich lediglich den Schaltkastendeckel des bestehenden Motors mit einem erfindungsgemäßen Schaltkastendeckel austauschen. Ein Verlegen von Leitungen ist nicht notwendig. Der Schaltkastendeckel ist folglich eine autarke Einheit und lässt sich vorzugsweise rückwirkungsfrei an dem Motor anstelle des vorhandenen Schaltkastendeckels anbringen.

Vorzugsweise werden die ermittelten Messgrößen und/oder Kennwerte in einem Speicher des Schaltkastendeckels hinterlegt, so dass eine Analyse der Messgrößen bzw. Kennwerte über die Zeit erfolgen kann.

In einer weiteren vorteilhaften Ausführungsform der Erfindung weist die Versorgungseinheit Mittel zur Energieauskopplung der Energie aus der Motoranschlussleitung auf.

Eine derartige Energieauskopplung aus der Motoranschlussleitung kann beispielsweise durch eine magnetische Energieauskopplung, eine kapazitive Energieauskopplung oder eine ohmsche Energieauskopplung (z.B. über einen Trafo) erfolgen.

In einer weiteren vorteilhaften Ausführungsform der Erfindung weist die Versorgungseinheit Mittel zur Energiegewinnung der Energie durch Energy Harvesting auf.

Bei einer Energiegewinnung durch Energy Harvesting erfolgt die Erzeugung von Strom aus Quellen wie beispielsweise der Umgebungstemperatur, aus Vibrationen oder der Luftströmung.

In einer weiteren Ausführungsform der Erfindung weist ein Schaltkasten eines Motors den erfindungsgemäßen Schaltkastendeckel auf.

In einer weiteren vorteilhaften Ausführungsform weist ein Motor einen Schaltkasten mit einem erfindungsgemäßen Schaltkastendeckel auf.

In einer weiteren vorteilhaften Ausführungsform der Erfindung sind die Sensoreinheit, das Kommunikationsmittel und die Versorgungseinheit auf einer Platine des Schaltkastendeckels angebracht.

Im Folgenden werden die Erfindung und Ausgestaltung der Erfindung anhand der in den Figuren dargestellten Ausführungsbeispiele näher beschrieben und erläutert. Es zeigen:
- FIG 1: eine schematische Darstellung eines Elektromotors 1, und
- FIG 2: eine schematische Darstellung einer im montierten Zustand dem Schaltkasten 2 zugewandten Seite des Schaltkastendeckels 3 aus FIG 1.

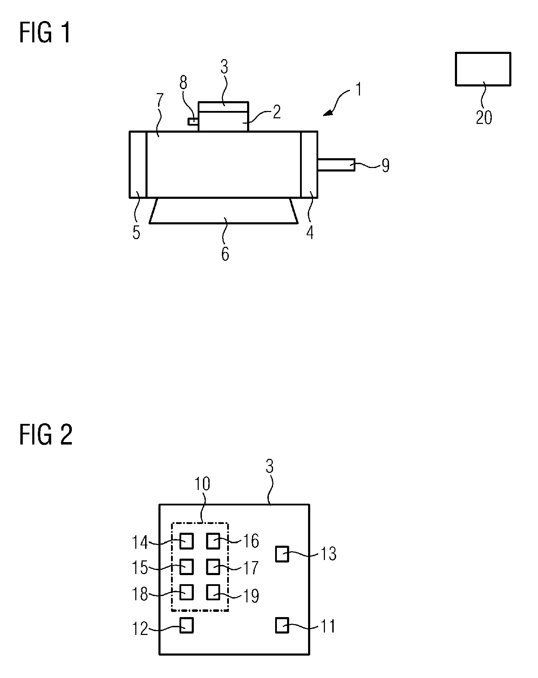

FIG 1 zeigt eine schematische Darstellung eines Elektromotors 1. Der Elektromotor 1 ist auf einem Ständer 6 befestigt. Der Elektromotor 1 umfasst eine Welle 9, eine Motorlagerschale A-Seitig 4 und eine Motorlagerschale B-Seitig 5, welche das Maschinengehäuse des Elektromotors 7 umschließt. Die Motorlagerschalen 4,5 bilden den hinteren und vorderen Deckel des Maschinengehäuses 7. Durch die Motorlagerschalen 4,5, welche die Lager der Welle 9 aufnimmt, wird das Maschineninnere gegen Berührungen geschützt. Die Motorlagerschale A-Seitig 4 bezeichnet die Antriebsseite und trägt in der Regel ein Festlager. Die Motorlagerschale B-Seitig 5 ist die "Lüfterschale" und die Lagerung erfolgt üblicherweise über einen Schiebesitz. Der Elektromotor 1 weist ferner einen Schaltkasten 2 auf. Dieser Schaltkasten 2 ist fest mit dem Elektromotor 1 verbunden. Über eine Anschlussöffnung 8 des Schaltkastens 2 kann die Motoranschlussleitung mit dem Elektromotor 1 zur Energieversorgung verbunden werden. Der Schaltkasten 2 weist einen Schaltkastendeckel 3 auf. Dieser Schaltkastendeckel 3 wird mit Hilfe von Befestigungselementen mit dem Schaltkasten 2 mechanisch verbunden.

Um eine Zustandsüberwachung des Elektromotors 1 zu ermöglichen, weist der Schaltkastendeckel 3 eine Sensoreinheit zur Erfassung mehrerer Messgrößen des Elektromotors 1 auf. Ein Kommunikationsmittel, welches im Schaltkastendeckel 3 integriert ist, ist dazu ausgebildet, einen die jeweilige Messgröße und/oder einen die Messgrößen charakterisierenden Kennwert einem Lesegerät 20 bereitzustellen. Die Kommunikation zwischen dem Kommunikationsmittel und dem Lesegerät 20 erfolgt hierbei drahtlos, so dass keine Verkabelung für die Zustandsüberwachung notwendig ist. Der Schaltkastendeckel 3 umfasst ferner eine Versorgungseinheit zur Versorgung der Sensoreinheit sowie des Kommunikationsmittels mit Energie. Der Schaltkastendeckel 3 bildet somit ein Condition Monitoring System für den Elektromotor 1.

Der Vorteil eines derartigen Condition Monitoring Systems für einen Elektromotor 1 besteht darin, dass keine aufwendige Montage (Verkabelung, Parametrierung, etc.) erforderlich ist. Ferner kommt es zu keinem sicherheitskritischen Verlegen von freiliegenden Leitungen, da bereits alles im Schaltkastendeckel 3 integriert ist. Ein weiterer großer Vorteil besteht ferner darin, dass ein Nachrüsten eines herkömmlicher Elektromotors mit Condition Monitoring Funktionen lediglich durch einen Austausch des Schaltkastendeckels mit einem die Condition Monitoring Funktionalität umfassenden Schaltkastendeckel 3 ermöglicht wird. Dies stellt einen enormen Vorteil für einen Endanwender dar.

FIG 2 zeigt eine schematische Darstellung einer im montierten Zustand dem Schaltkasten 2 zugewandten Seite des Schaltkastendeckels 3 aus FIG 1. Dieser Schaltkastendeckel 3 umfasst eine Sensoreinheit 10, eine Versorgungseinheit 12, ein Kommunikationsmittel 11 sowie ein Mittel 13 zum Bereitstellen des elektronischen Typenschildes. Die Versorgungseinheit 12 versorgt sowohl die Sensoreinheit 10, das Kommunikationsmittel 11 sowie das Mittel 13 zum Bereitstellen des elektronischen Typenschildes mit elektrischer Energie. Die Energiegewinnung erfolgt hierbei durch eine Energieauskopplung aus der Motoranschlussleitung. Alternativ oder zusätzlich hierzu kann ebenso durch Energy Harvesting Maßnahmen die Versorgung der jeweiligen Komponenten gewährleistet werden. Die Sensoreinheit 10 umfasst ferner ein Mittel 14 zur Teilentladungsmessung, ein Mittel 15 zum Messen einer Temperatur und einer Ständerwicklung des Elektromotors und/oder einer Umgebungstemperatur des Elektromotors, ein Mittel 16 zum Messen einer Unwucht des Elektromotors, einen Prozessor 17 sowie einen Speicher 19 zum Hinterlegen des Referenzwertes des Elektromotors und/oder der ermittelten Messgrößen bzw. Kennwerte. Zur Ermittlung der erwünschten Messwerte umfasst der Schaltkastendeckel 3 geeignete Sensoren.

Dadurch, dass der Schaltkastendeckel 3 ferner Referenzwerte des Elektromotors sowie einen Prozessor 17 und einen Speicher 19 aufweist, kann eine Zustandsüberwachung durch den Schaltkastendeckel 3 erfolgen. Die Zustandsüberwachung weist hierbei mehrere Teilschritte auf. Zunächst erfolgt eine Zustandserfassung. Hierbei erfolgt eine Messung von Messgrößen/Maschinenparameter des Elektromotors durch Sensoren der Sensoreinheit 10. Durch einen Zustandsvergleich wird der Istzustand des Elektromotors mit einem vorgegebenen Referenzwert verglichen. Dieser Referenzwert kann sowohl ein einzuhaltender Sollwert als auch ein nicht zu überschreitender Grenzwert des Elektromotors darstellen. Der jeweilige Referenzwert und folglich der jeweilige Sollwert wird je nach untersuchtem Parameter des Elektromotors entweder bei der Maschinenabnahme ermittelt oder durch vorgegebene Größen festgelegt. Derartige Referenzwerte liegen vorzugsweise bereits im elektronischen Typschild des jeweiligen Elektromotors vor. In einem nächsten Schritt erfolgt die Diagnose des ermittelten Messwerts mit dem Referenzwert. Dies erfolgt durch einen Prozessor 17, welcher in dem Schaltkastendeckel 3 angebracht ist. Sofern die Analyse bereits in dem Schaltkastendeckel 3 erfolgt wird über das Kommunikationsmittel ein die Messgröße charakterisierender Kennwert dem Lesegerät bereitgestellt. Dieser Kennwert signalisiert ob eine Sollwertüberschreitung stattgefunden hat oder nicht. Ferner kann anhand des Kennwertes eine vorliegende Abweichung der Messgröße gegenüber der Referenzgröße angegeben werden. Erfolgt eine nachgeschaltete Analyse der ermittelten Messgrößen so kann ebenso der die Messgröße charakterisierende Kennwert lediglich ein die Messgröße darstellender Wert sein.

Durch die Integration eines Speichers 19 kann ferner die Historie des Elektromotors genauer betrachtet und analysiert werden. Über das externe Lesegerät kann beispielsweise die Historie der Messgrößen und/oder Kennwerte des Elektromotors über das Kommunikationsmittel 11 ausgelesen werden und analysiert werden. Ferner kann eine derartige Analyse ebenso bereits innerhalb des Schaltkastendeckels 3 mit Hilfe des Prozessors 17 erfolgen.

Durch die Integration des Prozessors 17 kann eine kontinuierliche Überwachung des Elektromotors und ein ständiges Erfassen der Maschinenparameter in Echtzeit ermöglicht werden. Auf diese Weise können sowohl langfristige Trends als auch sprunghafte oder transiente Zustandsänderungen erfasst und lückenlos kommentiert werden.

Durch den Schaltkastendeckel 3 kann ein Endanwender auf einfache Weise ohne aufwändigen Verkabelungsaufwand ein Condition Monitoring System innerhalb seiner Anlage bezüglich des Elektromotors nachrüsten. Er kann somit die Zuverlässigkeit seiner Anlage bzw. seines Elektromotors überwachen und folglich den Einsatz des Elektromotors verlängern. Unerwartete Maschinenausfälle können folglich vermieden werden. Ferner ist durch den Schaltkastendeckel 3 eine ständige Kontrolle des Elektromotors sowohl online als auch offline möglich. Ein weiterer Vorteil ist das der Schaltkastendeckel 3 eine autarke Einheit bildet und somit ohne großen Aufwand nachträglich bei einem bereits installierten Elektromotor nachgerüstet werden kann.

## Patentansprüche

1. Schaltkastendeckel (3) für einen Motor (1) umfassend:
- eine Sensoreinheit (10) mit einem Sensor zur Erfassung einer Messgröße des Motors (1),
- ein Kommunikationsmittel (11), welches dazu ausgebildet ist, einen die Messgröße charakterisierenden Kennwert einem Lesegerät (20) bereitzustellen,
- eine Versorgungseinheit (12) zur Versorgung der Sensoreinheit (10) mit Energie.

2. Schaltkastendeckel (3) nach Anspruch 1, wobei die Versorgungseinheit (12) zur Versorgung des Kommunikationsmittels (11) mit Energie vorgesehen ist.

3. Schaltkastendeckel (3) nach einem der vorhergehenden Ansprüche, wobei der Schaltkastendeckel (3) Mittel (13) zum Bereitstellen des elektronischen Typenschilds des Motors (1) über das Kommunikationsmittel (11) aufweist.

4. Schaltkastendeckel (3) nach einem der vorhergehenden Ansprüche, wobei die Sensoreinheit (10) Mittel (14) zur Teilentladungsmessung aufweist.

5. Schaltkastendeckel (3) nach einem der vorhergehenden Ansprüche, wobei die Sensoreinheit (10) Mittel (15) zum Messen einer Temperatur des Motors (1), insbesondere einer Ständerwicklung, und/oder einer Umgebungstemperatur des Motors (1) aufweist.

6. Schaltkastendeckel (3) nach einem der vorhergehenden Ansprüche, wobei die Sensoreinheit (10) Mittel (16) zum Messen einer Unwucht des Motors (1) aufweist.

7. Schaltkastendeckel (3) nach einem der vorhergehenden Ansprüche, wobei die Sensoreinheit (10) zur Bildung des Kennwertes mindestens einen Sensor zur Ermittlung einer Messgröße und einen Referenzwert des Motors (1) zum Abgleich mit der ermittelten Messgröße des Sensors aufweist.

8. Schaltkastendeckel (3) nach einem der vorhergehenden Ansprüche, wobei die Sensoreinheit (10) Mittel zum Analysieren der Messgrößen untereinander aufweist.

9. Schaltkastendeckel (3) nach einem der vorhergehenden Ansprüche, wobei die Sensoreinheit (10) zur Ermittlung des Kennwertes einen Prozessor (17) aufweist.

10. Schaltkastendeckel (3) nach einem der vorhergehenden Ansprüche, wobei das Kommunikationsmittel (11) zur Kommunikation mit einem externen Lesegerät (20) vorgesehen ist.

11. Schaltkastendeckel (3) nach einem der vorhergehenden Ansprüche, wobei die Versorgungseinheit (13) Mittel zur Energieauskopplung der Energie aus der Motoranschlussleitung aufweist.

12. Schaltkastendeckel (3) nach einem der vorhergehenden Ansprüche, wobei die Versorgungseinheit (13) Mittel zur Energiegewinnung der Energie durch Energy Harvesting aufweist.

13. Schaltkasten (2) eines Motors (1), welcher einen Schaltkastendeckel (3) nach einem der vorhergehenden Ansprüche aufweist.

14. Motor (1), welcher einen Schaltkasten (2) mit einem Schaltkastendeckel (3) nach einem der Ansprüche 1 bis 12 aufweist.

## Claims

1. Terminal box cover (3) for a motor (1) comprising:
- a sensor unit (10) having a sensor for recording a measured variable of the motor (1),
- a communications means (11), which is designed to make a parameter that characterizes the measured variable available to a reading device (20),
- a supply unit (12) for supplying the sensor unit (10) with energy.

2. Terminal box cover (3) according to claim 1, wherein the supply unit (12) is provided for supplying the communications means (11) with energy.

3. Terminal box cover (3) according to one of the preceding claims, wherein the terminal box cover (3) has means (13) for making the electronic rating plate of the motor (1) available via the communications means (11).

4. Terminal box cover (3) according to one of the preceding claims, wherein the sensor unit (10) has means (14) for partial discharge measurement.

5. Terminal box cover (3) according to one of the preceding claims, wherein the sensor unit (10) has means (15) for measuring a temperature of the motor (1), in particular of a stator winding, and/or an ambient temperature of the motor (1).

6. Terminal box cover (3) according to one of the preceding claims, wherein the sensor unit (10) has means (16) for measuring an out-of balance of the motor (1).

7. Terminal box cover (3) according to one of the preceding claims, wherein, in order to form the parameter, the sensor unit (10) has at least one sensor for determining a measured variable and a reference value of the motor (1) for comparison with the determined measured variable of the sensor.

8. Terminal box cover (3) according to one of the preceding claims, wherein the sensor unit (10) has means for analyzing the measured variables among one another.

9. Terminal box cover (3) according to one of the preceding claims, wherein the sensor unit (10) has a processor (17) for determining the parameter.

10. Terminal box cover (3) according to one of the preceding claims, wherein the communications means (11) is provided for communication with an external reading device (20).

11. Terminal box cover (3) according to one of the preceding claims, wherein the supply unit (13) has means for coupling energy from the motor connecting cable.

12. Terminal box cover (3) according to one of the preceding claims, wherein the supply unit (13) has means for obtaining energy by energy harvesting.

13. Terminal box (2) of a motor (1) which has a terminal box cover (3) according to one of the preceding claims.

14. Motor (1) which has a terminal box (2) having a terminal box cover (3) according to one of Claims 1 to 12.

## Revendications

1. Capot de boîtier de commande (3) pour un moteur (1), comprenant :
- une unité de détection (10) équipé d'un capteur destiné à détecter une grandeur de mesure du moteur (1),
- un moyen de communication (11), qui est configuré pour fournir à un appareil de lecture (20) une valeur caractérisant la grandeur de mesure,
- une unité d'alimentation (12) destiné à alimenter l'unité de détection (10) en énergie.

2. Capot de boîtier de commande (3) selon la revendication 1, dans lequel l'unité d'alimentation (12) est prévue pour alimenter le moyen de communication (11) en énergie.

3. Capot de boîtier de commande (3) selon l'une quelconque des revendications précédentes, dans lequel le capot de boîtier de commande (3) présente un moyen (13) destiné à fournir la plaque signalétique électronique du moteur (1) par l'intermédiaire du moyen de communication (11).

4. Capot de boîtier de commande (3) selon l'une quelconque des revendications précédentes, dans lequel l'unité de détection (10) présente un moyen (14) destiné à une mesure de décharge partielle.

5. Capot de boîtier de commande (3) selon l'une quelconque des revendications précédentes, dans lequel l'unité de détection (10) présente un moyen (15) destiné à mesurer une température du moteur (1) en particulier d'un enroulement statorique, et/ou une température ambiante du moteur (1).

6. Capot de boîtier de commande (3) selon l'une quelconque des revendications précédentes, dans lequel l'unité de détection (10) présente un moyen (16) destiné à mesurer un balourd du moteur (1).

7. Capot de boîtier de commande (3) selon l'une quelconque des revendications précédentes, dans lequel l'unité de détection (10) présente, afin de former la caractéristique, au moins un capteur destiné à déterminer une grandeur de mesure et une valeur de référence du moteur (1) destinée à un équilibrage avec la grandeur de mesure déterminée du capteur.

8. Capot de boîtier de commande (3) selon l'une quelconque des revendications précédentes, dans lequel l'unité de détection (10) présente un moyen destiné à analyser les grandeurs de mesure les uns par rapport aux autres.

9. Capot de boîtier de commande (3) selon l'une quelconque des revendications précédentes, dans lequel l'unité de détection (10) présente un processeur (17) afin de déterminer la caractéristique.

10. Capot de boîtier de commande (3) selon l'une quelconque des revendications précédentes, dans lequel le moyen de communication (11) est prévu pour communiquer avec un appareil de lecture externe (20).

11. Capot de boîtier de commande (3) selon l'une quelconque des revendications précédentes, dans lequel l'unité d'alimentation (13) présente un moyen destiné à un couplage énergétique de l'énergie issue de la ligne de raccordement de moteur.

12. Capot de boîtier de commande (3) selon l'une quelconque des revendications précédentes, dans lequel l'unité d'alimentation (13) présente un moyen destiné à une production d'énergie par récolte d'énergie.

13. Boîtier de commande (2) d'un moteur (1), qui présente un capot de boîtier de commande (3) selon l'une quelconque des revendications précédentes.

14. Moteur (1), qui présente un boîtier de commande (2) avec un capot de boitier de commande (3) selon l'une quelconque des revendications 1 à 12.
